Europäisches Patentamt

European Patent Office

Office européen des brevets

(19)

(11) Veröffentlichungsnummer: **0 001 135**
**B1**

(12) **EUROPÄISCHE PATENTSCHRIFT**

(45) Veröffentlichungstag der Patentschrift:
05.08.81

(51) Int. Cl.³: **B 60 T 15/04**

(21) Anmeldenummer: **78200144.0**

(22) Anmeldetag: **21.08.78**

(54) **Druckregler an einem Führerbremsventil einer indirekt wirkenden Druckluftbremse.**

(30) Priorität: **07.09.77  CH 10915/77**

(43) Veröffentlichungstag der Anmeldung:
**21.03.79 Patentblatt 79/6**

(45) Bekanntmachung des Hinweises auf die Patenterteilung:
**05.08.81 Patentblatt 81/31**

(84) Benannte Vertragsstaaten:
**BE DE FR GB SE**

(56) Entgegenhaltungen:
**CH-PS 344 749**
**DE-B-1 146 520**
**DE-B-1 155 470**

(73) Patentinhaber: **Werkzeugmaschinenfabrik**
**Oerlikon-Bührle AG, Birchstrasse 155, CH-8050 Zürich**
**(CH)**

(72) Erfinder: **Müller, Walter, Rebenweg 10,**
**CH-8303 Bassersdorf (CH)**
Erfinder: **Deutsch, Heinz, Kreuzwiesen 17,**
**CH-8051 Zürich (CH)**
Erfinder: **Oldani, Karl, Leimgrübelstrasse 18,**
**CH-8052 Zürich (CH)**

Druckregler an einem Führerbremsventil einer indirekt wirkenden Druckluftbremse

Die Erfindung betrifft einen Druckregler an einem Führerbremsventil einer indirekt wirkenden Druckluftbremse, mit einem an eine Speiseleitung 11 angeschlossenen Druckregelventil 17, 18, 19, das von einem Differentialkolben 21, 22 betätigbar ist, der zwei Kammern 30, 32 begrenzt und der einerseits von einer einstellbaren Feder 23, 36 belastet und anderseits vom Regeldruck beaufschlagbar ist.

Bei einem bekannten Druckregler dieser Art (siehe DE-B-1 146 520) besitzt das Führerbremsventil einen Differentialkolben 15, 18, der zwei Kammern 19, 27 begrenzt. In der einen Kammer 27 belastet Regeldruck den Differentialkolben 15, 18. In der anderen Kammer 19 wird durch ein federbelastetes Angleicherventil 11 Druckluft eingeleitet, um die Hauptluftleitung 48 zu überladen.

Bei einem anderen bekannten Druckregler dieser Art (siehe CH-A-344 749) weist das Führerbremsventil einen Membrankolben auf, der einerseits von einer einstellbaren Feder 13 und einem konstanten Luftdruck belastet und anderseits vom Regeldruck beaufschlagbar ist.

Diese bekannten Druckregler haben den Nachteil, dass verhältnismässig grosse und starke Federn erforderlich sind; für einen Regeldruck von 5 bar sind z. B. Federkräfte von ca. 50 kg erforderlich.

Die Aufgabe der vorliegenden Erfindung besteht nun darin, den Druckregler so auszubilden, dass wesentlich kleinere Federn verwendet werden können.

Der erfindungsgemässe Druckregler ist dadurch gekennzeichnet, dass in der anderen Kammer 32 der Differentialkolben 21, 22 ausser durch die Federkraft durch einen Luftdruck belastet wird, welcher durch einen mit der Speiseleitung 11 verbundenen Druckbegrenzer 10 konstant gehalten ist.

Zwei Ausführungsbeispiele des erfindungsgemässen Druckreglers sind anhand der beigefügten Zeichnung im folgenden ausführlich beschrieben. Es zeigt:

Fig. 1 eine schematische Darstellung des Druckreglers gemäss einem ersten Ausführungsbeispiel und

Fig. 2 eine schematische Darstellung des Druckreglers gemäss einem zweiten Ausführungsbeispiel.

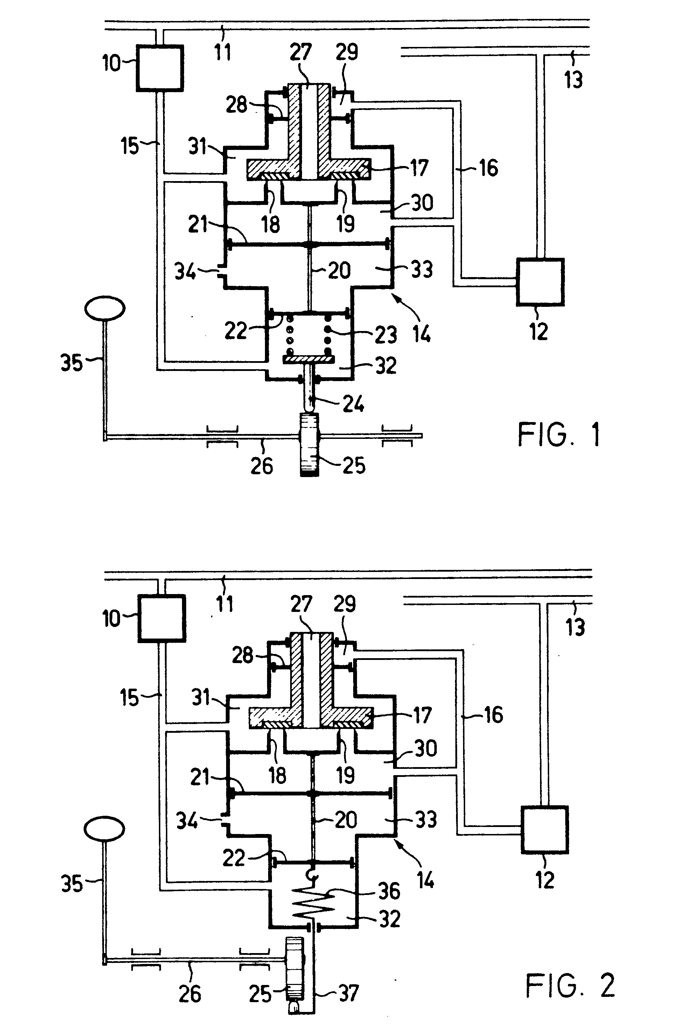

Gemäss Fig. 1 ist ein Druckbegrenzer 10 an eine Speiseleitung 11 und ein Hauptsteuerorgan 12 an eine Hauptluftleitung 13 angeschlossen. Ein Druckregler 14 ist einerseits über eine Zweigleitung 15 an den Druckbegrenzer 10 und anderseits über eine andere Zweigleitung 16 an das Hauptsteuerorgan 12 angeschlossen. Der Druckregler 14 weist ein Druckregelventil auf, das durch einen Ventilteller 17 gebildet wird, der einerseits mit einem ortsfesten Ventilsitz 18 und anderseits mit einem beweglichen Ventilsitz 19 zusammenwirkt. Der bewegliche Ventilsitz 19 befindet sich am Ende einer Kolbenstange 20, die an einem Differentialkolben befestigt ist, welcher aus einem kleinen Kolben 22 besteht. Eine Feder 23 stützt sich einerseits am kleinen Kolben 22 und anderseits an einem Stössel 24 ab. Dieser Stössel 24 wird durch die Feder 23 gegen eine Nockenscheibe 25 gedrückt, welche auf einer drehbar gelagerten Welle 26 befestigt ist. Ein Führerbremshebel 35 ist an der Welle 26 befestigt und dient zur Betätigung des beschriebenen Druckreglers 14. Der Ventilteller 17 weist eine Entlüftungsbohrung 27 auf und ist an einem Kolben 28 befestigt. Eine obere durch diesen Kolben 28 begrenzte Kammer 29 sowie eine erste zwischen Ventilteller 17 und dem grossen Kolben 21 befindliche Kammer 30 sind über die Zweigleitung 16 mit dem Hauptsteuerorgan 12 verbunden. Eine zweite zwischen dem oberen Kolben 28 und dem Ventilteller 17 befindliche Kammer 31 sowie eine unterhalb des kleinen Kolbens 22 befindliche untere Kammer 32 sind über die Zweigleitung 15 mit dem Druckbegrenzer 10 verbunden. Schliesslich ist eine mittlere Kammer 33, die sich zwischen dem grossen und kleinen Kolben 21 bzw. 22 befindet, über eine Öffnung 34 mit der Atmosphäre verbunden.

Die Wirkungsweise des beschriebenen Druckreglers ist wie folgt:

Der Druckbegrenzer 10 sorgt dafür, dass die von der Speiseleitung 11 entnommene Druckluft immer einen möglichst konstanten Wert, z. B. 5 bar, aufweist. In der zweiten Kammer 31 sowie in der unteren Kammer 32 herrscht somit ständig ein konstanter Druck von 5 bar.

Bei vollständig gelöster Bremse herrscht auch in der Hauptluftleitung 13 der maximal zulässige Druck von 5 bar. Damit dieser Druck erreicht wird, muss das Hauptsteuerorgan 12 diesen Druck in die Hauptluftleitung 13 einsteuern können. Es muss daher auch in der Zweigleitung 16, in der oberen Kammer 29 sowie in der ersten Kammer 30 dieser Druck von 5 bar herrschen. Somit herrscht in der ersten Kammer 30 oberhalb des grossen Kolbens 21 und in der unteren Kammer 32 unterhalb des kleinen Kolbens 22 derselbe Druck. Damit bei diesen Druckverhältnissen keine Druckluft aus der ersten Kammer 30 durch die Bohrung 27 des Ventiltellers 17 in die Atmosphäre entweichen kann, muss die Feder 23 entsprechend stark vorgespannt werden. Diese Vorspannung wird dadurch erreicht, dass die Nockenscheibe 25 mit Hilfe des Führerbremshebels 35 in die Lösestellung geschwenkt wird. Entsprechend der Differenz der beiden Kolben 21 und 22 kann die Feder 23 verhältnismässig klein dimensioniert sein.

Zum Bremsen muss der Druck in der Hauptluftleitung 13 gesenkt werden. Entsprechend der gewünschten Bremsstufe wird der Führerbremshebel 35 geschwenkt und dadurch die Feder 23 entspannt. Somit wird die auf den kleinen Kolben 22 wirkende Kraft verkleinert und beide Kolben 21, 22 werden sich senken. Aus der Kammer 30 kann Luft durch die Bohrung 27 in die Atmosphäre entweichen. Der Druck in der Kammer 30 wird daher so weit absinken, bis die von oben und unten auf den Differentialkolben 21, 22 wirkenden Kräfte wieder im Gleichgewicht sind. Entsprechend wird auch der Druck in der Hauptluftleitung 13 absinken.

Zum Lösen der Bremse muss der Druck in der Hauptluftleitung 13 erhöht werden. Entsprechend der gewünschten Lösestufe wird der Führerbremshebel 35 geschwenkt und dadurch die Feder 23 gespannt. Somit wird die auf den kleinen Kolben 22 wirkende Kraft vergrössert und beide Kolben 21, 22 werden sich heben. Der Ventilteller 17 wird von seinem Sitz 18 abgehoben und Druckluft strömt aus der zweiten Kammer 31 in die erste Kammer 30. Der Druck in der Kammer 30 wird daher ansteigen, bis die von oben und unten auf den Differentialkolben 21, 22 wirkenden Kräfte wieder im Gleichgewicht sind. Entsprechend wird auch der Druck in der Hauptluftleitung 13 ansteigen.

Bei dem Ausführungsbeispiel gemäss Fig. 2 ist die Druckfeder 23 durch eine Zugfeder 36 ersetzt worden, dementsprechend stützt sich eine an der Zugfeder 36 befestigte Stange 37 an der unteren Seite der Nockenscheibe 25 ab. Die Zugspannung der Feder 36 lässt sich somit genau so verändern wie die Druckspannung der Druckfeder 23, und demgemäss kann der Druck in der Hauptluftleitung 13 gesteuert werden. Bei dem gezeigten Grössenverhältnis der Kolben 21 und 22 kann bei dieser Ausführungsform allerdings keine Druckgleichheit in den Kammern 30 und 32 erreicht werden. Der Druck in Kammer 32 wird stets grösser sein als in Kammer 30.

## Patentansprüche

1. Druckregler an einem Führerbremsventil einer indirekt wirkenden Druckluftbremse, mit einem an eine Speiseleitung (11) angeschlossenen Druckregelventil (17, 18, 19), das von einem Differentialkolben (21, 22) betätigbar ist, der zwei Kammern (30, 32) begrenzt und der einerseits von einer einstellbaren Feder (23, 36) belastet und anderseits vom Regeldruck beaufschlagbar ist, dadurch gekennzeichnet, dass in der anderen Kammer (32) der Differentialkolben (21, 22) ausser durch die Federkraft durch einen Luftdruck belastet wird, welcher durch einen mit der Speiseleitung (11) verbundenen Druckbegrenzer (10) konstant gehalten ist.

2. Druckregler nach Anspruch 1, dadurch gekennzeichnet, dass die Feder als Zugfeder (36) ausgebildet ist.

## Claims

1. A pressure controller for the driver's brake valve of an indirectly-acting compressed air brake comprising a pressure control volve which is connected to a compressed air supply line and which is actuated by a differential piston, limiting two chambers, the piston being subjected on one side to the force exerted by an adjustable spring and on the other side to control pressure characterised in that on the other side the piston is subjected additionally to said spring to an air pressure which is hold substantially constant by a pressure limiter connected to said compressed air supply line.

2. A pressure controller according to claim 1, wherein the spring is an extension spring.

## Revendications

1. Régulateur de pression pour le robinet du frein du conducteur d'un frein à air comprimé à effet indirect, comportant une soupape de régulation de pression (17, 18, 19) reliée à une conduite d'alimentation (11), cette soupape étant susceptible d'être commandée par un piston différentiel (21, 22) délimitant deux chambres (30, 32) et qui est, d'une part, maintenu par un ressort réglable (23, 36) et, d'autre part, peut être sollicité par la pression de réglage, caractérisé en ce que dans l'autre chambre (32), le piston différentiel (21, 22) est mis en charge par une pression d'air en plus de la force du ressort, cette pression étant maintenue constante par un limiteur de pression 10 relié à la conduite d'alimentation (11).

2. Régulateur de pression selon la revendication I caractérisé en ce que le ressort est un ressort de traction (36).

FIG. 1

FIG. 2